# EUROPEAN PATENT APPLICATION

(11) **EP 4 343 280 A1**
(43) Date of publication of application: **27.03.2024**
(21) Application number: 22196473.7
(22) Date of filing: 20.09.2022
(51) Int. Cl.: G01C 15/06, G01C 15/00

(54) **MONITORING ARRANGEMENT FOR AN OPTICAL SYSTEM**

(71) Applicant: Hexagon Technology Center GmbH, 9435 Heerbrugg (CH)
(72) Inventor: JENSEN, Thomas, CH-9400 Rorschach (CH); STIGWALL, Johan, CH-9008 St. Gallen (CH)
(74) Representative: Kaminski Harmann

(57) **Abstract**

Optical detection unit (20) comprising a retro-reflecting element (30) which provides a reflection surface configured for retro-reflecting a first part of measuring light as reflected measuring light for providing determination of a position of the optical detection unit (20) and a passage surface (32) configured for transmitting a second part of the measuring light as transmitted measuring light, further comprising a sensor arrangement (40) with a sensor (41) configured and arranged behind of the retro-reflecting element (30) so that the transmitted measuring light is detectable by the sensor (41). The optical detection unit (20) comprises a referencing assembly (50) with at least one illumination unit (54,55,56) configured to emit reference illumination light. The at least one illumination unit (54,55,56) is arranged with fixed positional relationship to the retro-reflecting element (30) and/or the sensor arrangement (40) and the referencing assembly (50) is configured and arranged to direct the reference illumination light onto the sensor (41).

## Description

The invention relates generally to an optical arrangement, preferably for use in the field of industrial metrology or geodetic surveying, which provides detection of received measuring light.

Surveying systems for determining positions in the field of geodesy or the field of building or construction are diversely known. Examples thereof are systems consisting of a static surveying apparatus having a direction determination unit and a range meter, for example a total station, and a measuring aid instrument for marking a point to be measured or to be characterized, for example a pole. A geodetic measuring device of the prior art is described, for example, in the publication document EP 1 686 350. Layout systems are also known, consisting of a static laser emitter, which by means of a laser beam generates a position reference that can be received by a laser receiver at the point to be marked. Surveying activities are thus carried out by the interaction of a static apparatus, having a known location and therefore offering a position reference, with a receiving or marking, or targetable, measuring aid means, so that the position of individual terrain points such as land surveying points or points on construction site objects, for example in the interior or exterior region of buildings or in road construction, can be determined accurately with view to position measurement or staking-out.

With respect to the configuration of the surveying apparatuses, numerous different embodiments are known. For example, modern total stations have microprocessors for digital post-processing and storage of recorded measurement data. The apparatuses generally have a compact and integrated design, there usually being coaxial distance measuring elements as well as computation, control and storage units in an apparatus. Depending on the level of development of the total station, motorization of the targeting or sighting device and - in the case of using retroreflectors (for instance an all-round prism) as target objects - means for automatic target searching and tracking may furthermore be integrated. As a man-machine interface, the total station may comprise an electronic display/control unit - generally a microprocessor computation unit with an electronic data memory means - having a display and input means, for example a keypad. The display/control unit is supplied with the measurement data recorded by electrical sensors, so that the position of the target point can be determined, optically displayed and stored by the display/control unit. Total stations known from the prior art may furthermore have a radio data interface for setting up a radio link to external peripheral components, for example to the measurement aid instrument or to a handhold data recording apparatus, which may for example be configured as a data logger or field computer.

In order to sight or target the target point to be surveyed, geodetic surveying apparatuses of the generic type comprise a target telescope, for example an optical telescope, as a sighting device. The target telescope is generally rotatable about a vertical upright axis and a horizontal tilt axis relative to a base of the measuring apparatus, so that the telescope can be aligned with the point to be measured by swivelling and tilting. In addition to the optical viewing channel, modern apparatuses may comprise a camera for recording an image, integrated into the target telescope and for example aligned coaxially or parallel, in which case the recorded image may in particular be represented as a live image on the display of the display/control unit and/or on a display of the peripheral apparatus - for example the data logger - used for remote control.

Current surveying apparatuses by now comprise an automatic target tracking function for prisms used as a target reflector (ATR: "Automatic Target Recognition") as standard. To this end, for example, a further separate ATR light source and a special ATR detector (for example a CCD surface sensor) sensitive to this wavelength are additionally integrated in the telescope.

In many geodetic applications, surveying of points is carried out by placing a specially configured measuring aid instrument or target objects (for example surveying rods) at the target point. This usually consists of a pole with a reflector (for example an all-round prism) for definition of the measurement path, or of the measurement point. For such surveying tasks, data, instructions, speech and further information items are typically transmitted between the target object and the central measuring apparatus in order to control the measurement process and in order to establish or register measurement parameters. Examples of such data are identification information items for the target object (from example of the type of prism used), the inclination of the pole, the height of the reflector above the ground, reflector constants or measurement values such as temperature or air pressure. These information, or situation-contingent parameters are required in order to allow highly precise targeting and surveying of the measurement point defined by the pole with a prism.

In addition, determination of the spatial orientation or an inclination relative to respectively relevant spatial directions of the respective aid instrument is required or to be adjusted in a defined way (for example vertically), in order together with the determined position of the reflector arranged on the aid instrument to derive the measurement point to be determined by means of the instrument. Such orientation may, for example, be determined by means of an inclination sensor which is provided in a determined position and placement relative to the reflector.

The use of inclination sensors allows simple position determination in two rotational degrees of freedom. In this way, a roll and a pitch of the measuring aid instrument, i.e. a respective rotation about respective horizontal axes, may be determined. Technically more complexly configured, however, is the determination of a third spatial direction, a rotation about a vertical axis, for example the longitudinal axis of the pole, the so-called yaw of the measuring aid instrument.

To this end, solutions by means of additional devices on the part of the measuring instrument are known from the prior art. The respective device is in this case, for example, illuminated by the total station etc. and the yaw angle may also be deduced with the aid of an angle of incidence on side of the measuring aid instrument or imaging of a code. Such solutions are, for example, known from EP 2 916 104 A1.

A disadvantage with such solutions is that, in addition to the reflector typically present, at least one further component is provided on the measuring aid instrument and there is therefore increased complexity in relation to the configuration of such instruments, and/or the instruments have a relatively large spatial extent. A recording angle which can thereby be provided is limited because of the arrangement, i.e. the possible measurement range is limited. Furthermore, determination of the orientation, particularly in relation to the use of inclination sensors, is achievable only in the scope of the respective limited sensor accuracy. Furthermore, the additional components respectively entail additional error sources in relation to the determination of position and orientation (for example, an undetermined angle offset of the inclination sensor relative to the reflector due to mechanical loading leads to lower accuracy, or vitiated values).

A solution according to EP 1 200 853, in which a prism has a small passage opening for the measurement beam and the latter partially strikes a sensor directly (in a similar way as in the imaging of a pinhole camera) also has considerable disadvantages in relation to achievable accuracies. Precise determination of the position of the radiation on the sensor is achieved only with great restriction, since this determination accuracy depends crucially on the measurement distance, the beam quality and the environmental conditions (fog, rain, dust). Slight contaminations, for example even in the form of a fingerprint on the outer surface of the prism, may lead to asymmetrical imaging or displacement of the radiation transmitted through the small opening on the sensor and therefore to a measurement error during the evaluation. Since only a single very small spot is evaluated, corresponding error influences are hardly detectable and may lead to greatly restricted robustness for measurements in the outdoor field.

A further disadvantage results from a dependency of optical parameters on environmental influences like thermal (temperature) or humidity changes or mechanical influences (e.g. shocks). Such environmental influences may lead to a change of the spatial extent or the relative positions of optical and/or detecting elements.

It is therefore an object of the present invention to provide an improved compact device which allows more reliable and robust orientation measurement.

A further object of the present invention is to provide an improved optical device which allows determining possible deviations of the optical device from a target state.

These objects are achieved by implementation of the characterizing features of the independent claims. Features which refine the invention in an alternative or advantageous way may be found in the dependent patent claims.

The invention is based on the idea of incidence angle-correlated detection of the position of received measuring light (e.g. a code projection), which can be generated by electromagnetic radiation entering a reflector. In surveying or metrology it is a general object to determine geometrical properties such as coordinates, distances, and orientations of one or more target objects relative to a surveying device (e.g. total station, tachymeter etc.), wherein in most instances those properties have to be determined with respect to a known reference system, e.g. defined by one or more known reference points. The incidence angle-correlated detection of the position allows to determine an orientation of the device concerning at least one degree of freedom. Furthermore, the invention relates to a referencing assembly provided for detecting possible deviation of the optical arrangement (in particular reflector and sensor) for e.g. compensation of the measurement of the angle of incidence by means of measuring light detection or code detection. Therefore, the referencing assembly provides for reliable, robust and highly accurate orientation measurement with such reflector-detector-arrangement.

The invention relates to an optical detection unit (reflector-detector-arrangement) for position determination and/or marking target points, in particular for industrial or geodetic surveying. The optical detection unit comprises a retro-reflecting element which provides a reflection surface configured for retro-reflecting a first part of measuring light as reflected measuring light for providing determination of a position of the optical detection unit, in particular configured for coaxially retro-reflecting the measuring light, and a passage surface configured for transmitting a second part of the measuring light as transmitted measuring light.

As a retro-reflecting element (retro-reflector) in geodetic surveying, triple prisms or triple mirrors are typically used, which provide a corresponding parallel beam reflection. If the reflector is targeted with a surveying apparatus, the measurement beam is reflected back to the surveying apparatus and, with the aid of the signal thus recordable at the surveying apparatus, the distance to the reflector can be determined, for example by means of interferometry or time-of-flight calculation. A part, in particular a comparatively small part, of the total measurement radiation cross section may pass through the reflector provided according to the invention and is not reflected back. The passage surface provided therefore may, for example, be produced by cutting off a corner of a triple prism.

The measuring light preferably is provided as collimated laser light, in particular emitted by a measuring device like a surveying device (e.g. total station or laser scanner) or a metrology device (e.g. laser tracker). The laser light may be of one particular wavelength, e.g. having a wavelength of the visible spectrum VIS (e.g. 633 nm) or of the infrared spectrum IR.

The optical detection unit furthermore comprises a sensor arrangement with a sensor configured and arranged subsequently (downstream, behind) of the retro-reflecting element (in relation to a beam incidence direction) so that the transmitted measuring light which is passing through the passage surface is detectable by the sensor.

The sensor may, for example, be configured as a global-shutter or as a rolling-shutter sensor. The resolution in this case corresponds at least to VGA, there being a frame rate at full resolution of at least 20 Hz, in particular at least 50 Hz. The sensor may be configured as a CCD or CMOS, optionally as a linear or area sensor. When using a 2D sensor (surface sensor), a small field of view is obtained per pixel, so that less background light is recorded and the signal-to-noise ratio is improved. With a 1D sensor (linear sensor), more rapid data recording may be carried out.

The sensor may be configured as a (e.g. monochromatic) backside illumination sensor (as an alternative to front-side illumination). With such a sensor type, a relatively large incidence angle range may be recorded, so that with an arrangement of a plurality of retroreflector/sensor pairs it is possible to achieve improved coverage of the overall field of view, in particular with overlaps in the edge regions, or a smaller number of such pairs is required.

In one embodiment, the optical detection unit can comprise a code element (pattern layer) providing a code pattern. The code element is, for example, configured as a photomask and comprises defined regions for the transmission of electromagnetic radiation. The rest of the surface of the element may in this case be coated so as to be opaque to light, in particular for the wavelength of measurement laser radiation of a total station or laser tracker.

According to one embodiment, the pattern layer may be configured as a photomask and in particular connected, in particular by adhesive bonding or vapour deposition, to the passage surface of the retroreflector. The pattern may be provided by one or more light transmission regions provided by the photomask. A photomask is in this case intended, in particular, to mean a surface element which is at least partially opaque to light. The opacity to light (for example due to reflection or absorption) exists at least for a wavelength range around the wavelength of the measuring light and the reference illumination light. The photomask may, for example, be formed by a vapour-deposited thin film or an alternative application (for example onto a substrate such as a glass plate or the passage surface of the prism). The photomask may, for example, be provided as a multi-layer coating consisting of Cr/CrO layers (black chromium).

In particular, the photomask may comprise a multiplicity of randomly, in particular pseudo-randomly, arranged light-transmitting gaps, for example small circular surfaces, and the code pattern may be provided by said gaps. The light transmission may be provided with respect to a (narrow) wavelength range around the wavelength of measuring light and the illumination light. The gaps are, in particular, distributed in a deliberate and known arrangement on the photomask.

The retro-reflecting element and the sensor arrangement, in particular also the code element arranged between the retro-reflecting element and the sensor arrangement, are (rigidly) arranged in such a way that an incidence-angle-dependent position of the second part of the measuring light (transmitted measuring light) on a detection surface of the sensor can be determined by means of the sensor. In particular, a projection of the code pattern onto the detection surface caused by an interaction of the transmitted measuring light with the pattern layer can be positionally determined.

The optical detection unit comprises a referencing assembly with at least one illumination unit configured to emit reference illumination light. The illumination unit is arranged with fixed positional relationship to the retro-reflecting element and/or the sensor arrangement. The referencing assembly is configured and arranged to direct the reference illumination light onto the sensor.

The referencing assembly provides to derive an actual state of the optical detection unit by detecting a position, size and/or shape of the reference illumination light which impinges on the sensor and compare the detected position, size and/or shape with a respective reference value, e.g. reference position, in particular at reference conditions (e.g. a temperature of 20°C). A possible deviation between an actual position and the reference position allows to derive information about the actual (abnormal) state of the unit. In particular, a differing size of the detected reference illumination light (spot) can provide information about thermal expansion of the reflector. A differing position of the detected reference illumination light (spot) can provide information about misalignment or offset of the sensor arrangement relative to the retro-reflecting element.

In one embodiment, the optical detection unit can comprise a controlling and processing unit. The controlling and processing unit comprises a monitoring functionality configured to provide the reference illumination light by means of the illumination unit, to acquire image information related to the reference illumination light received by the sensor by means of the sensor, to determine at least one actual image information (e.g. position, size and/or shape) of an illumination of the sensor provided by the reference illumination light, to compare the actual image information with a nominal image information, in particular at reference conditions, for the illumination of the sensor by means of the illumination unit, to derive a deviation information based on the comparing of the actual image information and the nominal image information, the deviation information being an indication for a state of the optical detection unit, and to provide the deviation information.

The controlling and processing unit may also comprise a detection functionality, the detection functionality being configured for position-resolved detection of the measurement radiation by means of multiple readout of the sensor. In this case at least a first readout is carried out with measurement information relating to measurement radiation striking the detection surface and a second readout is carried out without this measurement information, in particular with the first and second readouts being carried out synchronized with switching emission of the measurement radiation on and off. From the recorded measurement data, differential information may be derived, from which for example background or ambient light jointly recorded with the laser radiation is subtracted.

Image recording by means of the sensor may thus, for example, be carried out in the form of alternating image recording alternately with and without incoming measuring light (laser radiation). To this end, the measuring light emission is switched on and off in a controlled way by the surveying apparatus (for example the total station). As a result, a differential image may be produced, which is cleaned in respect of the ambient light recorded with the laser switched off, i.e. image information obtained with the laser switched off may be subtracted from the image information with the laser switched on.

The image recording is, in particular, furthermore synchronized in one of the following ways with the switching of the laser on the measuring apparatus:
- A surveying device (for example a total station) may emit a trigger signal via radio, WLAN, Bluetooth, a current mobile radio standard, etc. in real-time or with a predefined time offset, for example a few microseconds or milliseconds in advance. The signal is recorded by the reflector arrangement and processed for the purpose of the synchronized image recording, in particular while taking the time offset into account.
- Internal clocks both of the surveying apparatus and of the optical detection unit are synchronized beforehand. Synchronism between the image recording and the measuring light emission may thus be determined with the aid of the respective time. The sensor may then be driven accordingly with the aid of this information. By means of a hardware-supported NTP (Network Time Protocol), very accurate synchronization can be achieved.

- As an alternative, the sensor may run asynchronously, i.e. images may for example be recorded with a frame rate higher than switching of the laser on and off is carried out. The synchronization may then be determined with the aid of the images. In this case, the frequency is known but the phase must be calculated, for example by means of IQ demodulation (determination of a temporal correlation for each pixel or for groups of pixels).
- As an alternative, either the laser switches with each image (for example an on and off switching cycle at 50 Hz and synchronous image recording at 100 Hz) or the laser switches more slowly (for example at 10 Hz) and a plurality of images are recorded per on or off switching phase.

In connection with the image recording, a plurality of recorded images may be averaged in order to reduce noise in the image information.

The image sensor may, in particular, be operated in binned mode (a plurality of pixels are summed or averaged in analog and read out with a higher frame rate). This reduces noise in two respects: spatially (less noise per pixel in binned mode) and temporally because of the higher frame rate.

In one embodiment, only a sub-region (region of interest) of the image sensor may be read out (for example only some of the light points generated) in order to save on CPU power and battery power and/or in order to increase the frame rate. The position of the sub-region on the sensor is, in particular, adapted in real-time (for example by means of locally resolved intensity monitoring or by means of image processing) in order to provide recording of the projection on the sensor continuously.

On reception of a measurement signal (measuring light), the reception may be confirmed to the surveying apparatus by means of a communication link, and identification information for the targeted target (target ID) may in this case be transmitted. This is advantageous when there are a plurality of reflector arrangements in the range of the surveying apparatus, in order to avoid possible erroneous measurement to another reflector arrangement.

As mentioned above, according to an embodiment, the optical detection unit, e.g. the sensor arrangement, can comprise a pattern layer, in particular a code element, arranged between the retro-reflecting element and the sensor, wherein the pattern layer provides a pattern (code) which is projectable onto the sensor by means of the transmitted measuring light and an incidence angle of the measuring light is determinable by an image of the projection of the pattern on the sensor, in particular wherein the pattern comprises a dot pattern. The pattern can be provided by a chromium layer having lithographically etched regions.

The imaging of a specific code onto the sensor provides a very accurate possibility for evaluation of a position of the projection. The projection location on the sensor may, for example, be determined highly accurately by means of image processing. By that, the angle of incidence can correspondingly be determined with high accuracy as well.

The pattern (code) can also be illuminated with the reference illumination light emitted by the at least one illumination unit and a respective projection of the pattern on the sensor can thus be provided. Such a projection of the pattern can be used for monitoring the state of the optical detection unit by comparing an actual code projection with a nominal appearance (concerning e.g. position, shape and/or size of the projection) for the code projection. A respective deviation can provide information about the actual (abnormal) state of the unit. In particular, a differing size of the detected pattern projection can provide information about thermal expansion of the reflector. A differing position of the detected pattern projection and/or a differing shape of the detected pattern projection can provide information about misalignment or offset of the sensor arrangement relative to the retro-reflecting element.

According to an embodiment of the invention, the optical detection unit can comprise a spacer which is arranged between the retro-reflecting element and the sensor. Hence, the sensor can be arranged at a particular distance relative to the code element in order to provide an improved incidence angle-dependent projection. To this end, a specific spacer may be provided between the two components, wherein the pattern layer may be provided on the side of the spacer which faces the retro-reflecting element. A thickness of the spacer can be chosen to match the angular range of the prism to the image sensor size. E.g. the space can be designed of a particular thickness to provide possible projections onto the sensor so that the projection can be provided over the entire detection surface of the sensor.

In an embodiment of the invention, the sensor arrangement can comprise at least one wavelength-selective filter, e.g. absorption filter or dielectric reflection filter, arranged between the retro-reflecting element and the sensor, wherein the wavelength-selective filter can be embodied as a low-pass or high-pass filter, in particular wherein the sensor arrangement comprises a low-pass absorption filter and a high-pass absorption filter. The at least one absorption filter may be built to also provide a particular distance between the retro-reflecting element and the sensor, i.e. the at least one absorption filter may provide the purpose of a spacer.

A wavelength-selective filter can provide to pass the signal wavelength to a higher degree than other wavelengths. The filter can provide to improve the signal-to-background ratio, i.e. a narrow band-pass filter may be preferred. A combination of low and high-pass can be chosen to obtain a suitable band-pass filter.

In particular, the referencing assembly can be configured and arranged to direct the reference illumination light through the retro-reflecting element onto the sensor, in particular through the passage surface.

The at least one illumination unit can be arranged in front of (upstream, before) the retro-reflecting element. Alternatively, the at least one illumination unit may be provided on the backside of the retro-reflecting element while the illumination can be coupled-in from the backside and directed to the sensor by (e.g. internal) reflection.

In one embodiment, the at least one illumination unit can be provided as a light emitting diode (LED). In particular, the LED can be an ultra-small LED having a side length of less than 250 µm, in particular less than 200 µm. The LED can be directly arranged (e.g. glued or cemented) on the retro-reflecting element.

According to one embodiment of the invention, the retro-reflecting element can comprise a front boundary surface configured for entry of the measuring light into the retro-reflecting element and a back boundary surface comprising the reflection surface and the passage surface, wherein the front boundary surface and the back boundary surface are arranged on different sides of the retro-reflecting element. As for example, the retro-reflecting element can be a triple prism having a cut-off corner which provides the passage surface.

In particular, the at least one illumination unit can be arranged on the front boundary surface of the retro-reflecting element, in particular glued or cemented on the front boundary surface.

In one embodiment, the referencing assembly can comprise an optical element for forming and/or guiding the reference illumination light. In particular, the optical element can comprise at least one aperture or lens. The illumination light can be collimated or focussed so that an interaction of the illumination light and the sensor generates a defined light spot on the sensor. The optical element can provide manipulation of the illumination light so that it is directed towards the sensor.

In one embodiment, the optical element can be arranged on the front boundary surface and the illumination unit can be arranged on the optical element, in particular wherein the optical element is annular. Hence, the optical element can be formed like a ring and the ring can be arranged in the front boundary surface. The ring-like shape provides masking of a comparatively small part of the front boundary surface to still provide sufficient transmission of measuring light to the sensor.

The optical element can preferably be combined with the retro-reflecting element which is embodied as a prism, in particular a triple prism, in particular mirrored. Accordingly, the prism comprising a light entry surface (front boundary surface), for example forming a circle or triangle and, as an aperture, the passage surface opposite the light entry surface.

In particular, the passage surface may be formed at a corner of the prism, in particular with the passage surface being formed by a detached corner of the prism and likewise defining a triangle. The detached corner may, for example, be provided by polishing down or cutting off the corner. A part of the measuring light entering the prism may leave the prism un-reflected on its rear side through the passage surface. The light entry surface and the passage surface are, in particular, parallel.

The optical axis of the sensor may essentially be oriented orthogonally or at a particular angle obliquely with respect to the passage surface. This may be particularly advantageous in an embodiment in which there is an air gap between the prism and the code element and/or between the code element and the sensor.

The passage surface of the retroreflector is correspondingly preferably oriented parallel to the detection surface of the sensor. A light entry surface of the retroreflector is, in particular, oriented obliquely with respect to the detection surface so that an included angle is defined by the light entry surface and the detection surface.

According to one embodiment of the invention, the optical detection unit can be configured as a 360° retro-reflector having a multiplicity, in particular having six or eight, retroreflector/sensor arrangement pairs each having a retro-reflecting element and a sensor arrangement. The multiplicity of retro-reflecting element are in this case arranged next to one another and are configured as prisms. Furthermore, the multiplicity of retro-reflecting element correspond numerically to the number of sensor arrangements, and each sensor arrangement is assigned to a retro-reflecting element. The retro-reflecting element and the sensor arrangements respectively assigned to one another are arranged according to the arrangement mentioned above.

In particular, the multiplicity of retroreflector/sensor arrangement pairs may be arranged annularly, and in particular form a ring, and the 360° retroreflector may define an overall azimuth field of view of 360°, each of the retroreflector/sensor arrangement pairs covering a part of the overall field of view. By the arrangement as a ring, a free space can remain at the center of the ring, which remains usable for electrical contacting of the sensors, or of their printed circuit boards.

By the configuration as a 360° reflector, advantageous targetability may be provided from all azimuthal directions, and in contrast no specific orientation of the reflector arrangement about the vertical yaw axis is required in order to permit suitable targeting and therefore make it possible to carry out geodetic surveying.

The configuration of a 360° reflector may comprise a central axis A defined by the annular arrangement of the prisms orthogonally with respect to the optical axes of the sensors. The optical axes of at least two, in particular three, prisms can have a common point of intersection with the central axis A. The position of an optical axis of a prism can be defined by the respective midpoints of its light entry surface and of its passage surface.

In another embodiment, the midpoints of the passage surfaces of the prisms of a first prism group of three prisms may lie in a first plane and the midpoints of the passage surfaces of the prisms of a second prism group of three prisms may lie in a second plane. The prisms are therefore offset in respect of their position along the central axis A. In particular, respectively neighboring prisms are offset correspondingly in their position, in particular alternatingly. Such arrangements provides a compact design of the 360° reflector.

The first plane and the second plane can, in particular, be oriented parallel to one another and have a particular spacing, in particular with the planes lying essentially orthogonally with respect to the central axis.

The illumination unit can be glued directly to the spacer, possibly on top of an aperture (provided at the spacer) which is smaller than the LED active surface in order to more accurately define the source position and control the sharpness of the shadow-casted spot on the sensor.

In one embodiment, the at least one illumination unit can be configured to emit the reference illumination light with a particular wavelength different from or identical with a wavelength of the measuring light.

In some embodiments, the retro-reflecting element or the referencing assembly can comprise a marker, wherein the marker is fixedly connected to the retro-reflecting element, in particular directly mounted onto the retro-reflecting element, and the illumination unit comprises a light source and is configured for illuminating the marker. Such arrangement can provide for monitoring and/or calibration of the optical detection unit e.g. in case of thermal impact which would result in structural changes (e.g. elongations) of optical elements.

The marker can preferably be arranged at the back boundary surface of the retro-reflector. The marker may be part of or understood to provide a (dot) pattern at the back side of the prism.

According to one embodiment, the illumination unit can comprise an optical element, in particular a collimator, which is assigned to the light source and the illumination unit is arranged at the front boundary surface for illumination, e.g. of the marker by illumination of the marker through the retro-reflecting element, i.e. the illumination light passes the retro-reflecting element.

In one embodiment, the illumination unit comprises a coupling optics, wherein the coupling optics is connected to the retro-reflecting element and provides coupling of illumination light into the retro-reflecting element.

In one embodiment, the at least one referencing assembly is arranged and configured so that the marker is imageable onto the sensor by means of the illumination of the marker and an image of the marker is detectable by the sensor arrangement.

The marker may be provided at the retro-reflector by printing, etching, scratching, gluing or other proper techniques.

In some embodiments, in particular for calibration of the optical detection unit, the marker can be illuminated by means of the illumination unit and an image of the marker is projected towards the sensor. An image of the marker is captured by the sensor. Based on the image, an image position of the marker in the image is derived. The image position can be compared with a (predefined) reference image position for the marker. Based thereon, a deviation between the image position of the marker and the reference image position can be determined. The deviation provides information about any changes in the optical system of the optical detection unit. In particular a scale or size of the marker image gives information about thermal expansions. Accordingly, based on the determined deviation, compensation or calibration data for the optical detection unit can be derived. The compensation or calibration data provides information about a state of at least the retro-reflecting element.

The invention also relates to a respective sensor calibration system. Such sensor calibration system may be provided by a measuring device or system, e.g. a surveying or metrology system, which comprises an optical detection unit of above. The sensor calibration system comprises a controlling and processing unit which comprises a calibrating functionality which is configured for:
- providing illuminating light by means of the illumination unit,
- capturing an image of the illumination, in particular an image of the illuminated pattern, by means of the sensor,
- deriving an image position of the illumination imaged onto the sensor,
- comparing the image position with a reference image position and determine a deviation between the image position and the reference image position, and
- based on the determined deviation, deriving calibration data for the optical detection unit, the calibration data provides information about a state of the retro-reflecting element.

The calibration data can be used for defining a nominal state of the optical detection unit, i.e. the data can provide imaging properties of the retro-reflecting element and/or the sensor arrangement. In other words, the calibration data can provide a function describing a correlation of a particular region on the sensor and a corresponding angel of incidence.

In one embodiment of the invention, the optical detection unit can comprise a mounting element configured to provide (mount) the retro-reflecting element so that the transmitted measuring light is detectable by the sensor.

The invention also relates to an optical system. The optical system comprises an optical detection unit according to any one of the embodiments of above and a controlling and processing unit. The controlling and processing unit comprises a monitoring functionality which is configured to
- provide the reference illumination light by means of the illumination unit,
- acquire image information related to the reference illumination light directed to the sensor by means of the sensor,
- determine at least one actual image information of an illumination of the sensor provided by the reference illumination light,
- compare the actual image information with a nominal image information for nominal illumination of the sensor by means of the illumination unit,
- derive a deviation information based on the comparing of the actual image information and the nominal image information, the deviation information being an indication for a state of the optical detection unit, and
- provide the deviation information.

The deviation information can be provided to a processor (e.g. the controlling and processing unit) for calculating compensation date based on the deviation information. The compensation date can be used for correcting erroneous measuring values derived by an orientation measurement (by means of detecting the transmitted measuring light). Hence, the deviation information can provide highly accurate orientation measurement (due to respective compensation if necessary) by means of the optical detection unit.

Alternatively, the deviation information can be provided to a user (by audio or visual signal) in order to indicate a level of accuracy of a current orientation measurement.

The invention also relates to a method for monitoring a state of an optical detection unit according to any one of the embodiments of above. The method comprises
- providing the reference illumination light by means of the illumination unit,
- acquiring by means of the sensor, image information related to the reference illumination light received by the sensor,
- determining at least one actual image information concerning the illumination of the sensor by the reference illumination light,
- comparing the actual image information with a nominal image information for nominal illumination of the sensor by means of the illumination unit,
- deriving a deviation information based on the comparing of the actual image information and the nominal image information and
- providing the deviation information.

As described above, the deviation information may be provided to a processor or to a user.

The method is preferably performed in continuous manner or in combination with a respective orientation measurement in order to provide compensation data which best represents the state of the optical detection unit at the time a measurement is conducted.

In one embodiment, compensation data for the optical detection unit can be derived based on the provided deviation information, the compensation data provides information about a state of the retro-reflecting element and/or the sensor arrangement.

The invention also relates to a method of building an optical detection unit. The method comprises the steps of:
- providing a sensor arrangement having a sensor,
- providing a retro-reflecting element having a front boundary surface and a back boundary surface, wherein the back boundary surface comprises a reflection surface configured for retro-reflecting a first part of measuring light as reflected measuring light and a passage surface configured for transmitting a second part of the measuring light as transmitted measuring light, wherein the front boundary surface and the back boundary surface are arranged on different sides of the retro-reflecting element,
- providing a mounting element configured to fix the retro-reflecting element relative to the sensor arrangement so that the transmitted measuring light is detectable by the sensor,
- providing a pre-arranged retro-reflecting element by arranging the retro-reflecting element and the mounting element so that the retro-reflecting element is provided in a desired and fixed position and orientation relative to the mounting element, and
- polishing the retro-reflecting element and the mounting element of the pre-arranged retro-reflecting element as a whole to prepare the passage surface and the mounting element to be perfectly fitted to the sensor arrangement.

By means of the mounting element, all components of the optical detection unit can be pre-assembled and fixed respectively. Polishing the retro-reflecting element can be performed together with the mounting element to provide a larger contacting surface with the sensor and thus to provide for more stable but still highly accurate mounting..

The optical detection unit can be part of a surveying system, in particular comprising a total station, a laser tracker or a laser scanner for emitting measuring light and determining a position and orientation of a target, wherein the system in particular also comprises the target, e.g. a retro-reflector or an accessory device like a pole which comprises such retro-reflector. The surveying system comprises an optical detection unit according to above and a controlling and processing unit.

The controlling and processing unit here comprises an orientation measuring functionality which is configured for
- capturing an image by means of the sensor, the image is captured while measuring light hits the optical detection unit,
- processing the image,
- deriving an image position of the transmitted measuring light imaged onto the sensor, and
- based on the derived image position, computing the incidence angle of the measuring light at the front boundary surface, the incidence angle depends on an orientation of the measuring device relative to a propagation direction of the measuring light.

Since the position on the sensor onto which the transmitted measuring light is directed depends on the incidence angel of the measuring light, the orientation of the sensor device relative to a propagation axis (direction) of the measuring light can be determined by respective position-determination with respect to the impinging position of the transmitted light. The orientation can be determined in at least one, preferably two, rotational degrees of freedom (of the sensor device). In other words, the incident angle of the measuring light can be determined (calculated) as a function of the relative image position on the sensor unit which corresponds to the position onto which the transmitted measuring light is projected.

The inventive aspects are described or explained in more detail below, purely by way of example, with reference to working examples shown schematically in the drawing. Identical elements are labelled with the same reference numerals in the figures. The described embodiments are generally not shown true to scale and they are also not to be interpreted as limiting the invention. Specifically,
- Fig. 1:: shows a geodetic surveying system having a reflector arrangement according to the invention;
- Fig. 2:: shows an exemplary embodiment of an optical detection unit according to the invention;
- Fig. 3:: shows a characteristic absorption and transmission behaviour of a optical detection unit according to the invention;
- Fig. 4:: shows an exemplary embodiment of an optical detection unit according to the invention;
- Fig. 5:: shows a mounting device of an optical detection unit according to the invention;
- Fig. 6a-c:: show an exemplary embodiment of an optical detection unit according to the invention; and
- Fig. 7:: shows an embodiment of a code pattern for providing particular projection of the reference illumination light onto the sensor.

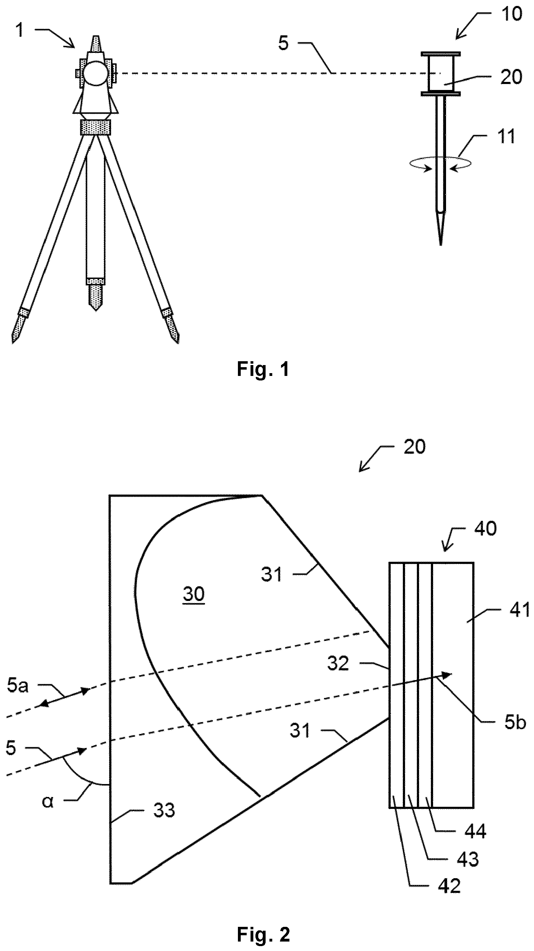

**Figure 1** shows a surveying apparatus 1, in particular configured as a total station or multi station, having a base, a supporting unit, which can be swiveled relative to the base about a vertical swivel axis, and a targeting unit which can be rotated about a horizontal axis and, by means of the supporting unit, about the vertical axis. A measurement laser beam 5 (measuring light) is emitted from the targeting unit and strikes an optical detection unit 20 (reflector arrangement) of a measuring aid instrument 10 configured as a pole. Typically, (collimated) laser radiation, which can be generated by a laser diode or gas laser provided on the surveying apparatus 1, is used as the measuring light 5. The optical detection unit 20 has a retroreflector and a sensor arrangement and is shown and described in more detail below.

For range measurement, the measuring light 5 is reflected back parallel by the retroreflector, recorded by the surveying apparatus 1 and evaluated in respect of distance information, for example by means of a time-of-flight measurement. The position of the measuring aid instrument 10 may be determined with the aid of the determination of the angular setting of the targeting unit, i.e. the emission direction of the laser 5.

For orientation determination of the measuring aid instrument 10, at least with respect to a rotational degree of freedom 11 (yaw), according to the invention a part of the radiation 5 which strikes the optical detection unit 20 and is not reflected passes through the retro-reflecting element (through a passage surface) and illuminates e.g. a code element (pattern), for example a photomask. A code pattern provided by the code element is thereby projected onto an optically subsequent (downstream) sensor, in particular an image sensor. The sensor is configured for recording an image of the projection generated in this way, i.e. a projection of a code pattern or of the transmitted illumination light. The code pattern can therefore be recorded in an image. A position of the projection in the image, and by that a position of the projection on the sensor (or on the detection surface of the sensor) can be determined by means of image processing.

Because of a rigid arrangement of the sensor arrangement relative to the retro-reflecting element, the position of the projection on the sensor is correlated with the angle of incidence of the measuring light 5. By that, a direction for at least one degree of freedom in relation to the emission direction of the measurement light 5 can be determined from the determined position of the projection. An orientation of the measuring aid instrument 10 relative to the surveying apparatus 1 can therefore be determined, at least in parts.

For and during surveying, the spatial position and the orientation of the surveying apparatus 1 are typically known. Thus, an absolute orientation of the measuring rod 10 in space, i.e. in the coordinate system in which the surveying apparatus 1 is registered, can be determined.

In an alternative embodiment the optical detection unit 20 can be part of measuring probe to be tracked with a laser tracker. The optical detection unit 20 can also be mounted on a robot arm to provide determining a position of the arm.Figure 2 illustrates an embodiment of an optical detection unit 20. The optical detection unit 20 comprises a retro-reflecting element 30 and a sensor arrangement 40. The retro-reflecting element 30 comprises a front boundary surface 33.The retro-reflecting element 30 also provides a reflection surface 31 configured for retro-reflecting a first part of measuring light as reflected measuring light 5a for providing determination of a position of the optical detection unit 20. The retro-reflecting element 30 also provides a passage surface 32 configured for transmitting a second part of the measuring light as transmitted measuring light 5b. In one embodiment the retro-reflecting element 30 can comprise a pattern layer at the passage surface 32.

The reflection surface 31 can for example be coated with a particular material which provides reflectance of the measuring light up to 100%.

The sensor arrangement 40 comprises a sensor 41 configured and arranged downstream (subsequently) of the retro-reflecting element 30 so that the transmitted measuring light 5b can be detected by the sensor 41. Arranged "downstream" should be understood as being arranged behind the retro-reflecting element 30 with respect of a propagation direction of the incoming measuring light 5.

In the shown embodiment the sensor arrangement 40 additionally comprises an absorbing low-pass filter 42, an absorbing high-pass filter 43 and a cover glass 44 of the image sensor 41. Since signal intensity is not a limiting factor for the sensor and since the absorption can provide reduction of reflections within the sensor arrangement 40 the absorption filters 42 and 43 may be preferred filters for limiting the wavelength range of transmitted background light.

The arrangement of retro-reflecting element 30 and sensor arrangement 40 provides to determine an angel of incidence α of incoming measuring light 5 by determining a position on which the transmitted measuring light 5b hits the sensor 41. The position on the sensor 41 on which the transmitted measuring light 5b reaches the sensor is correlated to the angel of incidence α. Further, the angel of incidence α provides information about an orientation (in at least one degree of freedom) of the optical detection unit 20 relative to a propagation axis along which the measuring light 5 propagates. The propagation axis typically corresponds with an aiming direction set by a geodetic surveying device for aiming a target like the optical detection unit 20. Consequently, determining the position on the sensor 41 on which the transmitted measuring light 5b reaches the sensor provides to determine an orientation of the optical detection unit 20 relative to an optical axis of the measuring light 5.

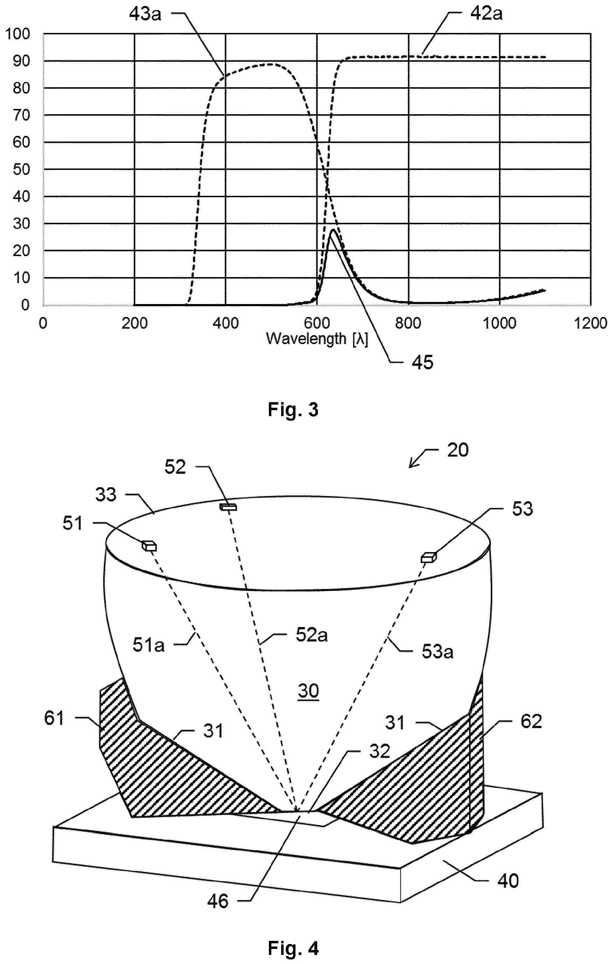

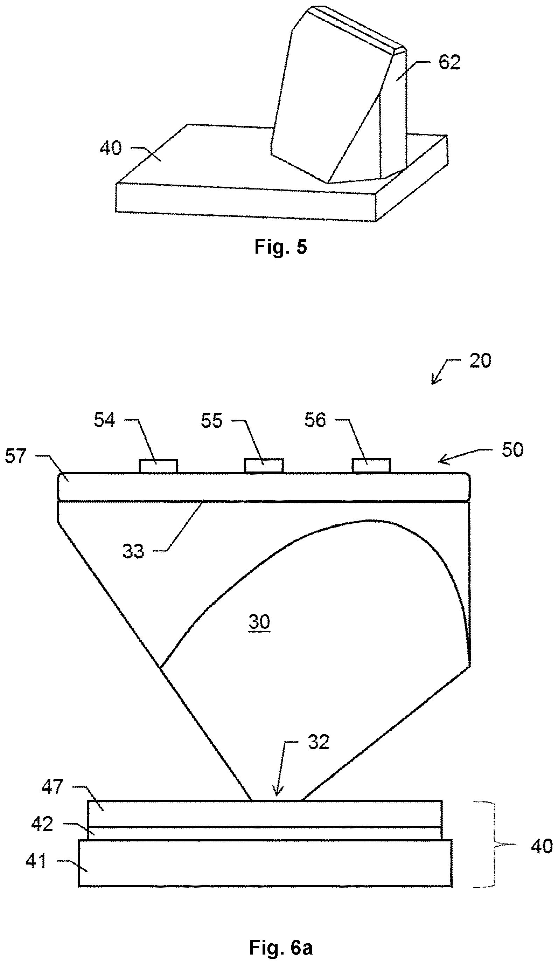

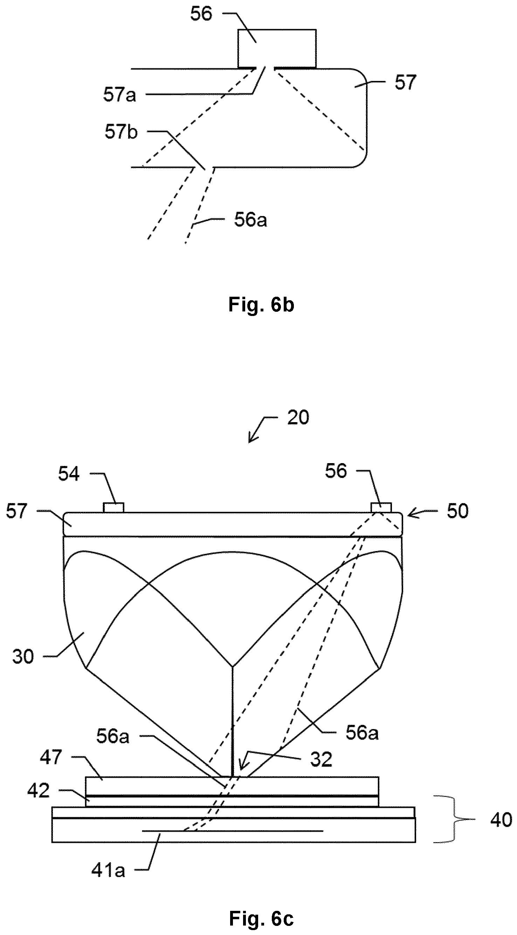

The optical detection unit 20 comprises a referencing assembly (not shown) as described above and with the following figures, e.g. figures 4 and 6.

In one embodiment the sensor 41 can be implemented as a polarisation sensitive image sensor. Accordingly, the measuring light can be emitted as polarised measurement light to provide determination of the roll angle of the optical system. In this way the setup can be provided as 6DOF capable.

**Figure 3** illustrates a resulting filtering effect of combined absorption low-pass filter 42 and absorption high-pass filter 43 of a sensor arrangement 40 according to figure 2. The absorption characteristics of the filters are adjusted so that a maximum transmission at a wavelength range of about between 630 nm and 640 nm is provided. Such range of maximum light transmission is preferably provided in correspondence of a wavelength of the measuring light used for measuring the position of a measuring aid instrument comprising the sensor arrangement 40. The range of maximum light transmission can be set by combination of particular filters each having a particular filter characteristic.

The curve 42a illustrates the low-pass filter characteristic of low-pass filter 42 and the curve 43a illustrates the high-pass filter characteristic of high-pass filter 43. The curve 45 illustrates the total transmission characteristic of the combined filters.

In another embodiment of the invention (not shown) the total filter characteristic can be set to provide at least two transmission ranges which each provides transmission of light of a particular wavelength. Such setting may preferably be used in combination with a referencing assembly having a light source of a wavelength different from the measuring light.

**Figure 4** illustrates an embodiment of an optical detection device 20 according to the invention. The optical detection device 20 comprises a retro-reflecting element 30 (retro-reflector) which provides reflection of a first part of incoming measuring light and transmission of a second part of the measuring light. Reflection of the measuring light is provided by respective reflection surfaces 31 of the retro-reflector 30. Transmission of the measuring light is provided by a respective passage surface 32 of the retro-reflector 30. For that, the reflection surfaces 31 can be coated with a reflecting coating, e.g. a metallic coating, while the passage surface 32 may be uncoated or may comprise a particular non-reflection coating.

The passage surface can be cemented/glued to the sensor without an air gap. Antireflection and/or total-transmission of the passage surface 32 can be achieved by index-matching between prism-glass, cement and filter.

The optical detection device 20 furthermore comprises a sensor arrangement 40 having a sensor to detect measuring light which is transmitted via the passage surface 32. The sensor arrangement 40 comprises a pattern layer 46. The pattern layer 46 is provided between the retro-reflector 30 and the sensor and provides a pattern which is projectable onto the sensor by means of the transmitted measuring light. Hence, the sensor is enabled to detect a projection of the pattern onto the sensor. The projection of the pattern depends on the incidence angle of the measuring light, i.e. an actual projection is correlated to an actual angle of incidence of the measuring light entering the retro-reflector 30.

The projection can be captured in an (digital) image (by means of the sensor) and the image can be processed in order to derive the actual position, shape and/or size of the projection. By that, an actual incidence angle of the measuring light can be determined based on the detected projection of the pattern, i.e. a position of the projected pattern.

The pattern can preferably be provided as a dot pattern comprising a particular number and distribution of dots on the pattern layer 46. In particular, the pattern can be provided by a chromium layer having lithographically etched regions, e.g. dots.

The optical detection device 20 comprises a referencing assembly. In the present embodiment, the referencing assembly comprises three illumination units 51, 52 and 53 which are configured to emit reference illumination light 51a, 52a and 53a. The illumination units 51, 52 and 53 are built as light emitting diodes (LED) which emit the reference illumination lights 51a, 52a and 53a in a direction towards the sensor arrangement 40. The LEDs are configured to emit reference illumination light with a particular wavelength. The wavelength of the emitted reference illumination light can be identical with the wavelength of the measuring light or may differ from that wavelength.

Preferably, the LEDs 51, 52 and 53 are provided as ultra-small LEDs having a side length of less than 200 µm. Energy supply of the LEDs can be realised by respectively thin wires.

Alternatively, at least one of the illumination units 51, 52 and 53 can be built as a different light source such as an OLED or a laser. In particular, laser light of a laser light source can be coupled into the retro-reflector 30 by means of an optical fiber.

The illumination units 51, 52 and 53 are arranged directly on the front surface 33 of the retro-reflecting element 30 with fixed positional relationship relative to the retro-reflecting element 30. The illumination units 51, 52 and 53 can preferably be glued or cemented on the retro-reflecting element 30, e.g. by use of an optical cement.

The reference assembly, in particular the illumination units 51, 52 and 53, provides to derive a state of the optical detection device 20. Such state can be determined by emitting the reference lights 51a, 52a and 53a and detecting the emitted reference lights 51a, 52a and 53a with the sensor. Each of the emitted reference lights 51a, 52a and 53a can be detected on a particular region of the sensor, e.g. by respective projections of a pattern. By means of image processing, a position, shape and/or size for each of the detected lights can be determined. By comparing the positions, shapes and/or sizes of the detected lights in the image with respective reference information for the detected lights a possible deviation can be identified and determined. Based on such determined deviation an information about an actual state of the optical detection device 20 becomes available.

Hence, possible spatial changes e.g. of the reflector 30 due to thermal changes, a displacement of the reflector 30 relative to the sensor 40 or other deviations from a reference arrangement can be detected or derived.

As for example, in case the detected lights (or at least one of them) is detected on a position which differs from a pre-defined reference position for that detection an expansion of the reflector 30 due to increased environmental temperatures can be detected.

In consequence, the information regarding a given deviation can be further processed and considered for determining an orientation of the optical detection device 20 by detecting incident measuring light. By that, an orientation measurement which is performed with an optical detection device 20 being in an abnormal state can be compensated by processing the information provided by a detection of the reference light.

The reference assembly can be configured so that the reference lights 51a, 52a and 53a are provided in focused or collimated manner or having significant limited divergence, e.g. by providing additional optical elements like a lens, aperture or pin hole.

The reference assembly can be configured and arranged so that the pattern is projected onto the sensor not only by means of the measuring light but also by the reference lights 51a, 52a and 53a and the information regarding a possible (structural) deviation can be derived by capturing and processing the respective projections.

Alternatively or additionally the marker can be placed on the front surface 33 of the prism (reflector 30) and be illuminated from behind through the prism, i.e. the illumination unit is mounted on a different surface side of the reflector. In that case, the markers could either be specularly reflective (e.g. thin metal coating), diffusely reflective (e.g. glass etched to increase roughness, then metal-coated) or fluorescent (reducing the influence of the illumination angle). The marker can cause a shadow onto the image sensor 40.

The optical detection device 20 further comprises mounting elements 61 and 62 which are configured to fix the retro-reflecting element 30 relative to the sensor arrangement 40 so that the transmitted measuring light 5a is detectable by the sensor. The mounting elements 61 and 62 can directly be mounted on the sensor arrangement 40 or may be mounted on a spacer between the reflector 30 and the sensor arrangement 40.

The optical detection device 20 as shown here can be produced or manufactured by initially providing (e.g. gluing or cementing) the mounting elements 61 and 62 on the reflection surfaces 31 of the prism 30. For example, there can be provided three mounting elements (two of them are shown) corresponding to three reflection surfaces of the prism. In particular the mounting elements 61 and 62 can consist of the same glass material as the prism 30 to avoid any thermally induced stress that can cause optical anisotropy (birefringence). The whole assembly, i.e. prism and mounting elements, can thus be designed to behave as a homogenous glass monolith.

Polishing of the backside of the whole assembly (including the passage surface 32) can be performed in one single step. The assembly can be attached to the sensor arrangement 40 after polishing. That approach enables to provide highly accurate connection of the retro-reflecting element 30 and the sensor arrangement 40.

**Figure 5** exemplarily shows a mounting element 62 which is configured to fix the retro-reflecting element relative to the sensor arrangement 40. Such mounting element 62 further provides precise alignment and robust mounting of the reflector relative to the sensor which as a result provides more precise and reliable measurements with the system.

**Figures 6a to 6c** show a further embodiment of an optical detection device 20 according to the invention in different views and levels of detail.

The optical detection device 20 comprises a retro-reflecting element 30 (retro-reflector) having a passage surface 32 which allows a second part of received measuring light to pass the retro-reflector 20 while a first part of the measuring light is reflected. Furthermore, a sensor arrangement 40 is comprised by the optical detection device 20. The sensor arrangement 40 comprises an image sensor 41, e.g. a CMOS or CCD, and an absorption filter 42. A spacer 47 is arranged between the retro-reflecting element 30 and the sensor 41. The spacer 47 here is built to allow transmission of at least the measuring light, i.e. the spacer 47 is optically transparent for the wavelength of the measuring light. The retro-reflecting element 30 is directly mounted on the spacer 47. The spacer 47 may be built as a further absorption filter. Here the spacer 47 is shown to be a part of the sensor arrangement 40. However, according to an alternative embodiment, the spacer may be a separate component arranged between the retro-reflecting element 30 and the sensor arrangement 40.

Such arrangement allows to detect incoming measuring light, to derive an angle of incidence of the measuring light by means of detecting the measuring light passed through the reflector 30 via the passage surface 32 and to derive an impinging position (or region) of measuring light on the sensor 41 by acquiring respective sensor date, e.g. an image of the impinging light. Using the angle of incidence, the orientation of the entire optical detection device 20 relative to a propagation axis of the measuring light (e.g. emitted with known emitting direction by a total station) can be determined.

The optical detection device 20 additionally comprises a referencing assembly 50. The referencing assembly 50 has three illumination units 54-56 configured to emit reference illumination light towards the sensor arrangement 40. The illumination units 54-56 can comprise or be built as LEDs. Of course, the invention is not limited to a referencing assembly 50 with three illumination units but also covers embodiments with at least one illumination unit or a plurality of illumination units.

The referencing assembly 50 furthermore comprises an optical element 57 for forming and guiding the reference illumination light. The optical element 57 is arranged on the front boundary surface 33 of the retro-reflecting element 30. The illumination units 54-56 are mounted on the optical element 57. In the shown embodiment, the optical element 57 is of annular shape and is formed as a ring.

As shown in more detail with figure 6b, the optical element 57 comprises two apertures 57a and 57b (pin-holes) provided on opposite sides of the optical element 57. The LED 56 is arranged to emit its illumination light 56a so that it passes the first aperture 57a and enters the optical element 57. Further, a part of the entered illumination light 56a passes the second aperture 57b and enters the retro-reflecting element 30. The optical element 57, in particular the apertures, is configured so that the illumination light 56a is directed towards the passage surface 32.

Such part of the illumination light 56a which enters the retro-reflecting element 30 propagates through the reflector 30 and at least a part of the illumination light 56a exits the reflector 30 via the passage surface 32. The part of the illumination light 56a which passes the passage surface 32 further propagates through the spacer 47 and the filter 42 and finally reaches the sensing layer 41a of the sensor arrangement 40. The position on which the illumination light 56a reaches on the sensor depends on the relative arrangement of the emitting illumination unit and the state (extension, shape and/or relative alignment of respective components of the optical detection device 20).

A reference position on which the illumination light 56a is detected on the sensor in case the optical detection device 20 is in an ideal (nominal) state is pre-known or predetermined. An ideal (nominal) state is to be understood as a state of the optical detection device 20 according to which a possible orientation measurement is considered to be most precise and not (or only slightly) influenced to the worse by any external or environmental influences.

Alternatively, the nominal state may be understood to be the state in which the detection device 20 was calibrated, hence it will be the most accurate. By help of compensation data available by the referencing assembly 50 measuring data derived in other states of the device 20 can provide as nearly as accurate results.

Therefore, by comparing a position on which the illumination light 56a is currently detected with the reference position allows to derive a current state to the optical detection device 20 and further allows to provide respective compensation data for compensating orientation measurement being performed with such state.

Several reference positions can be determined at different environmental conditions (e.g. different temperatures) and stored in a database or in a look-up table. The reference positions may be provided as coordinates on the sensing surface of the sensor, as image coordinates of respectively captured images or as digital images.

Detection of a current position of the illumination light 56a at the sensor can be performed by capturing an image with the sensor and processing the image for determining a position of the illumination in the image.

Detection of a current position of the illumination light 56a allows to directly derive information about current imaging (light guiding and/or forming) characteristics of the optical detection device 20. Such imaging characteristics of the optical detection device 20 do accordingly effect imaging of the measuring light (propagation of the measuring light through the optical detection device 20) on the sensor.

In one embodiment a code pattern is provided in the plane of the passage surface 32. The code pattern can be realised as e.g. a black-chrome layer directly on the top surface of the spacer 47 or on the passage surface 32. The part of the illumination light 56a which passes the passage surface 32 provides a projection of the code pattern onto the sensor 41 (sensing layer 41a).

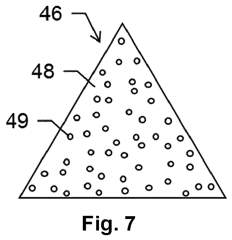

**Figure 7** shows an embodiment of a code pattern of a pattern layer 46 of the optical detection unit. The code pattern can be provided between the prism and the sensor. By such arrangement the pattern can be projected onto the sensor by means of transmitted measuring light and/or reference illumination light. The pattern layer can be provided as a black-chromium surface 48 having defined gaps 49 in the chromium layer. The gaps 49 are preferably be provided as dots (e.g. random dot pattern). The gaps can be produced by a lithographically processing (e.g. etching) with defined regions of surface 48.

An incidence angle of the measuring light can be determined by capturing an image of the projection of the pattern on the sensor and processing the image. The image comprises a distribution of light dots over the image which are generated by respective transmissions of the measuring light through the pattern dots 49. Based thereon, the incidence angle can be computed by comparing the distribution (or shape etc.) of the captured image dots with a corresponding reference distribution (e.g. stored in a database).

For monitoring of the state of the optical detection unit illumination of the pattern is provided with the reference illumination light. Again, an image of the projection of the pattern on the sensor can be captured and processed. A distribution, position (e.g. shift) and/or appearance (e.g. blur) of the projected dots on the image can be derived based thereon. Based thereon, a deviation information can be computed by comparing the actual image information, i.e. the distribution, position and/or appearance, with respective reference (nominal) image information (e.g. stored in a database). Such deviation provides an indication for a state of the optical detection unit. Based on the deviation information compensation data can be derived for providing compensation of measuring data to be obtained by detecting the measuring light. Although the invention is illustrated above, partly with reference to some preferred embodiments, it must be understood that numerous modifications and combinations of different features of the embodiments can be made. All of these modifications lie within the scope of the appended claims.

## Claims

1. Optical detection unit (20) comprising
• a retro-reflecting element (30) which provides
□ a reflection surface (31) configured for retro-reflecting a first part of measuring light as reflected measuring light (5a) for providing determination of a position of the optical detection unit (20) and
□ a passage surface (32) configured for transmitting a second part of the measuring light as transmitted measuring light (5b),
• a sensor arrangement (40) with a sensor (41) configured and arranged subsequently of the retro-reflecting element (30) so that the transmitted measuring light (5b) is detectable by the sensor (41),
**characterised in that**
• the optical detection unit (20) comprises a referencing assembly (50) with at least one illumination unit (51,52,53,54,55,56) configured to emit reference illumination light (51a,52a,53a,56a),
• the at least one illumination unit (51,52,53,54,55,56) is arranged with fixed positional relationship to the retro-reflecting element (30) and/or the sensor arrangement (40) and
• the referencing assembly (50) is configured and arranged to direct the reference illumination light (51a,52a,53a,56a) onto the sensor (41).

2. Optical detection unit (20) according to claim 1,
**characterized in that**
the referencing assembly (50) is configured and arranged to direct the reference illumination light (51a,52a,53a,56a) through the retro-reflecting element (30) onto the sensor (41), in particular through the passage surface (32).

3. Optical detection unit (20) according to claim 1 or 2,
**characterized in that**
the at least one illumination unit (51,52,53,54,55,56) is provided as a light emitting diode (LED), in particular wherein the LED is a ultra-small LED having a side length of less than 250 µm, in particular less than 200 µm, and the LED is directly arranged on the retro-reflecting element (30).

4. Optical detection unit (20) according to any of the preceding claims,
**characterized in that**
the retro-reflecting element (30) having a front boundary surface (33) configured for entry of the measuring light (5) into the retro-reflecting element (30) and a back boundary surface comprising the reflection surface (31) and the passage surface (32), wherein the front boundary surface and the back boundary surface are arranged on different sides of the retro-reflecting element (30).

5. Optical detection unit (20) according to claim 4,
**characterized in that**
the at least one illumination unit (51,52,53,54,55,56) is arranged on the front boundary surface, in particular glued or cemented on the front boundary surface.

6. Optical detection unit (20) according to any of the preceding claims,
**characterized in that**
the optical detection unit (20) comprises a spacer (47) which is arranged between the retro-reflecting element (30) and the sensor (41).

7. Optical detection unit (20) according any of the preceding claims,
**characterized in that**
the sensor arrangement (40) comprises at least one wavelength-selective filter (42,43) arranged between the retro-reflecting element (30) and the sensor (41).

8. Optical detection unit (20) according to claim 6 or 7,
**characterized in that**
the reference assembly (50), in particular the illumination unit (51,52,53,54,55,56), is arranged on the spacer (47) or on the absorption filter (42,43).

9. Optical detection unit (20) according to any of the preceding claims,
**characterized in that**
the at least one illumination unit (51,52,53,54,55,56) is configured to emit the reference illumination light (51a,52a,53a,56a) with a particular wavelength different from a wavelength of the measuring light (5).

10. Optical detection unit (20) according to any of the preceding claims,
**characterized in that**
the optical detection unit (20) comprises a pattern layer (46), in particular a code element, arranged between the retro-reflecting element (30) and the sensor (41), wherein the pattern layer (46) provides a pattern which is projectable onto the sensor by means of the transmitted measuring light and/or by means of the reference illumination light (51a,52a,53a,56a).

11. Optical detection unit (20) according to any of the preceding claims,
**characterized in that**
the optical detection unit (20) comprises a mounting element (61,62) configured to provide the retro-reflecting element (30) so that the transmitted measuring (5b) light is detectable by the sensor (41).

12. Optical system comprising
• an optical detection unit (20) according to any one of the claims 1 to 11 and
• a controlling and processing unit
**characterized in that**
the controlling and processing unit comprises a monitoring functionality configured to
• provide the reference illumination light (51a,52a,53a,56a) by means of the at least one illumination unit (51,52,53,54,55,56),
• by means of the sensor (41), acquire image information related to the reference illumination light (51a,52a,53a,56a) directed to the sensor,
• determine at least one actual image information of an illumination of the sensor provided by the reference illumination light (51a,52a,53a,56a),
• compare the actual image information with a nominal image information for nominal illumination of the sensor by means of the at least one illumination unit (51,52,53,54,55,56),
• derive a deviation information based on the comparing of the actual image information and the nominal image information, the deviation information being an indication for a state of the optical detection unit (20), and
• provide the deviation information.

13. Method for monitoring a state of an optical detection unit (20) according to any one of the claims 1 to 11, the method comprising
• providing the reference illumination light (51a,52a,53a,56a) by means of the at least one illumination unit (51,52,53,54,55,56),
• acquiring by means of the sensor (41), image information related to the reference illumination light (51a,52a,53a,56a) received by the sensor,
• determining at least one actual image information of an illumination of the sensor provided by the reference illumination light (51a,52a,53a,56a),
• comparing the actual image information with a nominal image information for nominal illumination of the sensor by means of the at least one illumination unit (51,52,53,54,55,56),
• deriving a deviation information based on the comparing of the actual image information and the nominal image information and
• providing the deviation information.

14. Method according to claim 13,
**characterized by**
based on the provided deviation information, deriving compensation data for the optical detection unit (20), the compensation data provides information about a state of the retro-reflecting element (30) and/or the sensor arrangement (40).

15. Method of building an optical detection unit (20), the method comprising the steps of:
• providing a sensor arrangement (40) with a sensor (41),
• providing a retro-reflecting element (30) having a front boundary surface and a back boundary surface comprising a reflection surface (31) configured for retro-reflecting a first part of the measuring light as reflected measuring (5a) light and a passage surface (32) configured for transmitting a second part of the measuring light as transmitted measuring light (5b), wherein the front boundary surface and the back boundary surface are arranged on different sides of the retro-reflecting element (30),
• providing a mounting element (61,62) configured to fix the retro-reflecting element (30) relative to the sensor arrangement (40) so that the transmitted measuring light (5b) is detectable by the sensor,
• providing a pre-arranged retro-reflecting element (30) by arranging the retro-reflecting element (30) and the mounting element so that the retro-reflecting element (30) is provided in a desired and fixed position and orientation relative to the mounting element (61,62),
• polishing the retro-reflecting element (30) and the mounting element of the pre-arranged retro-reflecting element as a whole to prepare the passage surface to be perfectly fitted to the sensor arrangement.
